# EUROPÄISCHE PATENTSCHRIFT

(11) **EP 4 357 046 B1**
(45) Veröffentlichungstag und Bekanntmachung des Hinweises auf die Patenterteilung: **10.12.2025**
(21) Anmeldenummer: 22202030.7
(22) Anmeldetag: 17.10.2022
(51) Int. Cl.: G01N 29/04, G01N 29/06, B21J 15/02, B21J 15/28, G01M 99/00

(54) **TESTSYSTEM ZUR AUTOMATISCHEN ZERSTÖRUNGSFREIEN PRÜFUNG UND ERMITTLUNG DER OPTIMALEN FÜGEPARAMETER EINER MECHANISCHEN FÜGEVERBINDUNG, DAZUGEHÖRIGES FÜGESYSTEM SOWIE ENTSPRECHENDES VERFAHREN**
TEST SYSTEM FOR AUTOMATIC NON-DESTRUCTIVE TESTING AND DETERMINATION OF THE OPTIMAL JOINT PARAMETERS OF A MECHANICAL JOINT, CORRESPONDING JOINT SYSTEM AND CORRESPONDING METHOD
SYSTÈME DE TEST POUR LE CONTRÔLE NON DESTRUCTIF AUTOMATIQUE ET LA DÉTERMINATION DES PARAMÈTRES OPTIMAUX D'ASSEMBLAGE D'UNE LIAISON MÉCANIQUE, SYSTÈME D'ASSEMBLAGE ASSOCIÉ ET PROCÉDÉ CORRESPONDANT

(43) Veröffentlichungstag der Anmeldung: 24.04.2024
(73) Patentinhaber: Böllhoff Verbindungstechnik GmbH, 33649 Bielefeld (DE)
(72) Erfinder: ERBIS, Sergej, 33165Lichtenau (DE); JUNKLEWITZ-REIMBOLD, Daniel, 33106 Paderborn (DE); MENNE, Franz Ferdinand, 33175 Bad Lippspringe (DE)
(74) Vertreter: HWP Intellectual Property

(56) Entgegenhaltungen:
- WO-A1-2021/041449
- DE-A1- 102014 223 187
- DE-A1- 102020 107 696
- US-A1- 2014 259 600
- SRAJBR C ET AL: "ACTIVE THERMOGRAPHY for QUALITY ASSURANCE of joints in automobile manufacturing", WELDING IN THE WORLD, SPRINGER, DE, vol. 55, no. 7-8, 1 July 2011 (2011-07-01), pages 90 - 97, XP001563543, ISSN: 0043-2288

## Beschreibung

### 1. Gebiet der Erfindung

Die vorliegende Erfindung betrifft ein Testsystem zur automatischen zerstörungsfreien Prüfung einer mittels eines Fügesystems hergestellten mechanischen Fügeverbindung zwischen mindestens zwei Bauteilen sowie zur automatischen Ermittlung der optimalen Fügeparameter, ein entsprechendes Fügesystem sowie ein Verfahren zur zerstörungsfreien Prüfung einer mittels eines entsprechenden Fügesystems hergestellten mechanischen Fügeverbindung zwischen mindestens zwei Bauteilen und zur automatischen Ermittlung der optimalen Fügeparameter.

### 2. Hintergrund der Erfindung

Fügesysteme, mit denen eine mechanische Fügeverbindung herstellbar ist, sind im Stand der Technik in einer Vielzahl bekannt. Derartige Fügesysteme bestehen herkömmlicherweise aus einer Antriebseinheit, einem Stempel, der mittels der Antriebseinheit entlang einer Längsachse bewegbar ist, sowie einem Gegenwerkzeug.

Zur Beurteilung der Qualität der mit dem Fügesystem hergestellten mechanischen Fügeverbindung sind unterschiedliche Ansätze bekannt. So beschreibt DE 10 2015 001 922 A1 ein Verfahren zum Ermitteln einer Qualität eines Fügevorgangs und eine Vorrichtung zum Ermitteln einer Qualität eines Fügevorgangs. Das Verfahren zum Ermitteln der Qualität eines Fügevorgangs, bei dem eine Fügeverbindung von wenigstens zwei durch ein Fügeelement miteinander zu fügender Bauteile hergestellt wird, umfasst die folgenden Schritte: Ermitteln eines den Fügevorgang beschreibenden Fügedatensatzes, welcher wenigstens eine Kraft-Weg-Kurve beschreibt, wobei die Kraft-Weg-Kurve eine zum Eintreiben des Fügeelements in die zu fügenden Bauteile aufgewendete Kraft in Abhängigkeit von einem durch das Fügeelement bei dessen Eintreiben in die miteinander zu fügenden Bauteile zurückgelegten Weg beschreibt, Ermitteln eines Steigungsdatensatzes aus dem Fügedatensatz, wobei der Steigungsdatensatz eine Mehrzahl von eine Änderung der Steigung der Kraft in Abhängigkeit von dem zurückgelegten Weg beschreibenden Steigungswerten der wenigstens einen Kraft-Weg-Kurve zumindest in einem vorbestimmten Bereich beschreibt, Vergleichen des Steigungsdatensatzes mit einem Referenzdatensatz zum Ermitteln der Qualität des Fügevorgangs, wobei der Referenzdatensatz eine Mehrzahl von Referenzsteigungen umfasst.

Ebenso beschreibt WO 2014/165125 A1 ein Verfahren zum sequenziellen Durchführen einer Vielzahl von Verbindungsvorgängen, das das Positionieren einer automatisierten Vorrichtung zum Bilden einer mechanischen Verbindung in einem Werkstück und das Bilden einer mechanischen Verbindung in dem Werkstück umfasst. Sobald die mechanische Verbindung gebildet ist, wird das Werkstück abgetastet, um Daten zu erzeugen, die die Oberflächengeometrie des Werkstücks an einer Stelle angeben, die die mechanische Verbindung enthält. Ein oder mehrere geometrische Merkmale der Oberflächengeometrie werden identifiziert, und wenn die identifizierten geometrischen Merkmale innerhalb jeweiliger vorbestimmter Spezifikationsschwellenwerte liegen, wird die automatisierte Vorrichtung neu positioniert, um eine nachfolgende mechanische Verbindung in dem Werkstück zu bilden.

Ein weiteres zerstörungsfreies Echtzeit-Überwachungsverfahren der Befestigungsqualität beispielsweise eines selbststanzenden Niets sowie ein entsprechendes Verfahren zum Befestigen eines selbststanzenden Niets und ein Ausrüstungssystem dafür werden in KR 2022-0087078 A erläutert. Das Überwachungsverfahren umfasst einen Stanznietprozess mit den Schritten Klemmen, Stanzen und Aufweiten. Dabei wird das im Prozess erzeugte akustische Signal gemessen. Basierend auf dem durch Fourier-Transformation analysierten akustischen Signal des Stanznietens wird die Qualität des Prozesses bewertet.

Die oben beschriebenen Vorgehensweisen haben den Nachteil, dass keine Kennwerte der Verbindung erfasst werden, die aus der inneren Gestaltung des Verbindungsaufbaus resultieren. Vielmehr werden ausschließlich die verwendeten Prozessparameter oder Setzparameter verwendet, um Rückschlüsse auf die Qualität der hergestellten Verbindung zu ziehen. Da der Fügevorgang in KR 2022-0087078 A in Echtzeit überwacht wird, ist zudem eine Prüfung der Verbindungsqualität im Anschluss und getrennt von dem Setzvorgang nicht möglich.

Abschließend beschreibt DE 10 2020 107 696 A1 eine Prozessanordnung zur Qualitätsprüfung einer Bauteilverbindung mit einem Hilfsfügeelement, das einen Elementkopf und einen hohlen Elementschaft aufweist. Das Hilfsfügeelement ist in einem Setzprozess mit seinem Elementschaft unter Aufrechterhaltung einer Restbodendicke in zumindest ein Bauteil eintreibbar. In der Bauteilverbindung ist das Hilfsfügeelement in einer Hilfsfügeelement-Längsachse gestaucht und der Elementfuß ist radial nach außen gespreizt. Insbesondere aufgrund von Bauteil- und/oder Fertigungstoleranzen variiert jedoch eine Verbindungsqualität der Bauteilverbindung. Daher weist die Prozessanordnung eine Prüfeinheit auf, mittels der nach dem Setzprozess eine Stauchung des Hilfsfügeelements zerstörfrei erfassbar ist.

Mit Ausnahme der in DE 10 2020 107 696 A1 beschriebenen Vorgehensweise ist es zur Ermittlung von Verbindungskennwerten, die aus der inneren Gestaltung der Verbindung resultieren, wie der Restbodendicke, des erzeugten Hinterschnitts und/oder eines Aufspreizverhaltens des verwendeten Fügeelements, üblicherweise erforderlich, eine zerstörende Prüfung der Verbindung vorzunehmen. Dies ist zeit- und kostenintensiv, da die Prüfung an Mustern und an Originalbauteilen erfolgt, die danach unbrauchbar sind. Dies widerspricht dem Gedanken eines ressourcenschonenden Herstellungsprozesses für Verbindungen.

Zudem ist dieses Vorgehen nicht automatisierbar und die manuelle Prüfung der Verbindung ist ausschließlich stichprobenartig realisierbar. Hinzu kommt eine gewisse Fehleranfälligkeit bei der Zerstörprüfung aufgrund der manuellen Durchführung.

Eine Vorrichtung zur zerstörungsfreien Prüfung einer Nietverbindung, insbesondere einer Blindnietverbindung, mit einem Gehäuse, in dem ein Messdorn gelagert ist, ist aus DE 10 2014 223 187 A1 bekannt. Um eine Vorrichtung zu schaffen, mit welcher eine zerstörungsfreie Prüfung einer Nietverbindung, insbesondere einer Blindnietverbindung, zumindest auf zwei der für die Beurteilung der Nietverbindung relevanten Qualitätskriterien möglich ist, ist eine Einrichtung zur Übertragung eines Drehmomentes auf die Nietverbindung und/oder ein Wirbelstromsensor vorgesehen.

Srajbr, C., et al beschreibt in dem Artikel "Active thermography for quality assurance of joints in automobile manufacturing", Welding in the World, Springer, DE, Band 55, Nr. 7-8, 1. Juli 2011, Seiten 90-97, die Verwendung von Thermographie-Verfahren zur zerstörungsfreien Qualitätsbeurteilung von Verbindungen im Automobilsektor.

WO 2021/041449 A1 beschreibt ein System und eine Methode zur Prüfung einer Baugruppe einschließlich durch Stanznieten verbundener Komponenten mittels Computertomographie (CT) der Verbindung. Das System umfasst eine Röntgenquelle, eine Montageeinheit für eine Baugruppe einschließlich der Verbindung, die den Röntgenstrahlen ausgesetzt ist, und einen gegenüber der Quelle angeordneten Röntgendetektor zum Erfassen der Röntgenstrahlen. Die Röntgenstrahlen werden mit einem hohen Energieniveau von mindestens 200 kV bereitgestellt, um Bilder mit einer Auflösung von mindestens 200 Mikrometern (µm) zu erzeugen. Ein Computer fügt die Bilder zu wiederhergestellten Bildern zusammen, die Details der Verbindung zeigen. Die zu prüfende Baugruppe wird vor dem Prüfvorgang nicht zerstört oder verändert. Die Auflösung der durch die Röntgenstrahlen erzeugten Bilder ist hoch genug, um das Vorhandensein von Rissen, falls vorhanden, die Verschränkung oder Verriegelung, die Mindestdicke und die Gesamtstruktur der unveränderten Baugruppe zu bestimmen.

Schließlich ist ein Verfahren zur sequentiellen Durchführung mehrerer Verbindungsvorgänge aus US 2014/259600 A1 bekannt. Das Verfahren umfasst das Positionieren einer automatisierten Vorrichtung zum Bilden einer mechanischen Verbindung in einem Werkstück und das Bilden einer mechanischen Verbindung in dem Werkstück. Sobald die mechanische Verbindung gebildet ist, wird das Werkstück gescannt, um Daten zu generieren, die die Oberflächengeometrie des Werkstücks an einer Stelle angeben, die die mechanische Verbindung umfasst. Ein oder mehrere geometrische Merkmale der Oberflächengeometrie werden identifiziert, und wenn die identifizierten geometrischen Merkmale innerhalb der jeweiligen vorgegebenen Spezifikationsschwellen liegen, wird das automatisierte Gerät neu positioniert, um eine nachfolgende mechanische Verbindung in dem Werkstück zu bilden.

Die Aufgabe der vorliegenden Erfindung ist daher, ein optimiertes Testsystem bereitzustellen, mit dem eine mechanische Fügeverbindung automatisch zerstörungsfrei prüfbar und die optimalen Fügeparameter ermittelbar sind. Zudem soll ein entsprechendes Fügesystem sowie ein dazugehöriges Verfahren bereitgestellt werden.

### 3. Zusammenfassung der Erfindung

Die obige Aufgabe wird gelöst durch ein Testsystem zur automatischen zerstörungsfreien Prüfung einer mittels eines Fügesystems hergestellten mechanischen Fügeverbindung zwischen mindestens zwei Bauteilen sowie zur automatischen Ermittlung der optimalen Fügeparameter gemäß dem unabhängigen Patentanspruch 1, ein entsprechendes Fügesystem gemäß dem unabhängigen Patentanspruch 7 sowie ein Verfahren zur zerstörungsfreien Prüfung und Optimierung einer mittels eines Fügesystems hergestellten mechanischen Fügeverbindung zwischen mindestens zwei Bauteilen gemäß dem unabhängigen Patentanspruch 11. Vorteilhafte Ausführungsformen und Weiterentwicklungen ergeben sich aus der nachfolgenden Beschreibung, den Zeichnungen sowie den anhängigen Patentansprüchen.

Ein erfindungsgemäßes Testsystem zur automatischen zerstörungsfreien Prüfung einer mittels eines Fügesystems hergestellten mechanischen Fügeverbindung zwischen mindestens zwei Bauteilen sowie zur automatischen Ermittlung der optimalen Fügeparameter umfasst: mindestens einen Sensor und mindestens eine Datenverarbeitungseinheit, wobei der mindestens eine Sensor ein elektromagnetischer Sensor oder ein akustischer Sensor ist, mit dem Messwerte der hergestellten Fügeverbindung erfassbar sind, so dass das Testsystem die zerstörungsfreie Prüfung auf Basis von Elektromagnetismus oder Akustik vornimmt, und mit der Datenverarbeitungseinheit aufgrund der von dem mindestens einen Sensor erfassten Messwerte mindestens ein Verbindungskennwert der hergestellten Verbindung ermittelbar ist, die hergestellte Verbindung aufgrund des ermittelten Verbindungskennwerts als in Ordnung oder nicht in Ordnung klassifizierbar ist, Verbindungskennwerte von Fügeverbindungen mit unterschiedlichen Fügeparametern vergleichbar sind und optimierte Fügeparameter und/oder Prozessparameter aufgrund des Vergleichs der Verbindungskennwerte bei unterschiedlichen Fügeparametern von der Datenverarbeitungseinheit ermittelbar sind.

Nachfolgend wird das erfindungsgemäße Testsystem im Rahmen eines Fügesystems erläutert. Das Fügesystem umfasst dabei eine Antriebseinheit, einen Stempel, der mittels der Antriebseinheit entlang einer Längsachse bewegbar ist, sowie ein Gegenwerkzeug. Vorzugsweise wird die mechanische Fügeverbindung mittels Clinchen oder mit Hilfe eines Fügeelements hergestellt, wie beispielsweise eines Niets oder dergleichen. Bei dem Fügesystem kann es sich insbesondere um ein Setzsystem handeln.

Bei der Verwendung eines solchen Fügesystems mit dem Testsystem werden dem Fügesystem in bekannter Weise mindestens zwei miteinander zu verbindende Bauteile zugeführt. Vorzugsweise kennt die Datenverarbeitungseinheit des Testsystems die Parameter der Bauteile, d. h. das Material des jeweiligen Bauteils, die Dicke des jeweiligen Bauteils, insbesondere im Fügebereich, sowie die Lagenanordnung der Bauteile im Stapel. Diese Parameter werden auch als Materialdickenkombinationswerte bezeichnet. Sofern ein Fügeelement zur Herstellung der mechanischen Fügeverbindung verwendet wird, kennt das Testsystem ebenfalls die Parameter des Fügeelements, wie beispielsweise die Materialbezeichnung, Länge, Gestaltung und dergleichen.

Optional ist es in diesem Zusammenhang bevorzugt, dass das Testsystem das Fügeelement hinsichtlich seiner Parameter kontrolliert. Eine entsprechende Kontrolle kann im Hinblick auf Risse, Länge, geometrische Eigenschaften, Härte, Beschichtung und dergleichen erfolgen.

In einem nächsten Schritt wird nun die mechanische Fügeverbindung zwischen den Bauteilen, beispielsweise einem ersten und einem zweiten Bauteil, hergestellt. Dies erfolgt mit dem ersten Satz Fügeparameter, der in Abhängigkeit von den Bauteilen, d.h. beispielhaft dem ersten und dem zweiten Bauteil, ausgewählt oder vorgegeben wurde. Beispielsweise hat die Datenverarbeitungseinheit des Testsystems aufgrund der Parameter der Bauteile ein erstes Gegenwerkzeug und/oder eine erste Art Fügeelement ausgewählt, sofern ein Fügeelement verwendet werden soll. Die Auswahl des Gegenwerkzeugs und gegebenenfalls des Fügeelements wird als Fügeparameter bezeichnet. Dies ist von den Prozessparametern zu unterscheiden, die die Kraft, den Stempelweg und/oder die Stempelgeschwindigkeit umfassen. Alternativ wird zumindest der erste Satz Fügeparameter durch einen Anwender ausgewählt. In beiden Fällen ist es bevorzugt, dass anfänglich, d.h. bei dem ersten Durchlauf, ein Standardgegenwerkzeug und ein Standardfügeelement oder ein Standardstempel beim Clinchen ausgewählt werden, um zunächst einen Ausgangspunkt für den später ermittelten Verbindungskennwert und den dazugehörigen Vergleich mit dem Verbindungskennwert bei anderen Fügeparametern zu haben.

Während oder nachdem die Verbindung zwischen den beiden Bauteilen hergestellt worden ist, werden über den mindestens einen Sensor, d. h. den elektromagnetischen Sensor oder den akustischen Sensor, Messwerte der hergestellten Verbindung erfasst. Beispielsweise kann diese Erfassung durch eine akustische Messung, d. h. das Aufbringen von Ultraschall oder eine Schwingungsanalyse, erfolgen. In diesem Fall weist das Testsystem einen entsprechenden Ultraschall-Prüfkopf auf, der den Sensor beinhaltet. Alternativ ist auch die Verwendung von elektromagnetischen Verfahren wie beispielsweise Röntgenstrahlung, Wirbelstromprüfung oder Thermographie verwendbar. Bezugnehmend auf die Röntgenstrahlung umfasst das Testsystem in diesem Fall weiterhin eine entsprechende Strahlenquelle, während der Sensor als entsprechender Detektor für Röntgenstrahlung ausgebildet ist. Dies wird später im Rahmen der bevorzugten Ausführungsformen näher erläutert.

Ausgehend von den vom Sensor erfassten Messwerten wird in der Datenverarbeitungseinheit nun ein Verbindungskennwert ermittelt. Bei dem Verbindungskennwert handelt es sich um einen inneren Kennwert der Verbindung. Als innerer Kennwert der Verbindung wird im Rahmen der vorliegenden Erfindung insbesondere die verbleibende Restbodendicke und/oder ein erzeugter Hinterschnitt im Fügebereich oder das Aufspreizverhältnis des Fügeelements verstanden. Im Hinblick auf das Clinchen wird, neben der Restbodendicke und dem erzeugten Hinterschnitt, auch eine Halsstärke als innerer Kennwert bzw. Verbindungskennwert gewertet. Nicht unter den Begriff des Verbindungskennwerts fällt daher ein Kopfüberstand des Fügeelements.

Der so ermittelte Verbindungskennwert wird in der Datenverarbeitungseinheit mit einem Sollwert verglichen. Dieser Vergleich erfolgt beispielsweise aufgrund einer in der Datenverarbeitungseinheit hinterlegten Kennwerttabelle. Ausgehend von dem Vergleich wird die Verbindung von der Datenverarbeitungseinheit dann klassifiziert als in Ordnung, wenn der ermittelte Verbindungskennwert innerhalb eines vorgebbaren Toleranzbereichs des Sollwerts liegt, oder als nicht in Ordnung, wenn der ermittelte Verbindungskennwert außerhalb des vorgebbaren Toleranzbereichs des Sollwerts liegt.

Da es sich vorliegend um ein Testsystem handelt, werden die obigen Verfahrensschritte nachfolgend wiederholt, allerdings mit einem zweiten Satz Fügeparameter. Hierzu wird ein anderes Gegenwerkzeug und/oder ein anderes Fügeelement verwendet. Selbstverständlich können bei Bedarf auch die jeweiligen Prozessparameter entsprechend angepasst werden.

Nach dem zweiten Durchgang vergleicht die Datenverarbeitungseinheit des Testsystems, welcher Satz Fügeparameter zu dem besseren Verbindungskennwert für die zu verbindenden Bauteile geführt hat. Auf dieser Grundlage ermittelt die Datenverarbeitungseinheit des Testsystems dann die optimalen Fügeparameter, d.h. welches Gegenwerkzeug und/oder welche Art Fügeelement sich am besten für die gewünschte mechanische Fügeverbindung bei den miteinander zu verbindenden Bauteilen eignet.

Diese werden anschließend beispielsweise an Fügesysteme einer Serienproduktion übermittelt, so dass die entsprechenden Fügesysteme entsprechend umgerüstet werden, falls erforderlich, und anschließend in den jeweiligen Fügesystemen für die Serienproduktion verwendet werden.

Aufgrund des selbständig arbeitenden Testsystems ist das Vorgehen vollständig automatisierbar und mit einer Vielzahl an unterschiedlichen Fügeelementen, Gegenwerkzeugen und/oder Prozessparametern durchführbar.

Ein erster Vorteil dieser Vorgehensweise ist, dass eine zerstörungsfreie Verbindungsprüfung in den Fügeprozess integriert ist, sodass das Fügesystem oder Setzsystem eigenständig und automatisiert Verbindungskenngrößen erfassen und im Hinblick auf die Verbindungsqualität auswerten kann. Weiterhin ist das Testsystem modular einsetzbar, so dass auch vorhandene Fügesysteme entsprechend nachgerüstet werden können.

Ein weiterer Vorteil der vorliegenden Erfindung ist, dass Verbindungsparameter nicht mehr manuell, beispielsweise durch eine Zerstörprüfung und das entsprechende Schliffbild, ermittelt werden müssen und dann erst an die Produktion weitergegeben werden können. Somit entfallen die dazugehörigen umfänglichen Analysen, die aufwendig und fehlerbehaftet sind. Vielmehr wird der entsprechende Prozess automatisiert, vorzugsweise vollständig, und ein System bereitgestellt, das selbstständig die Verbindungskennwerte erfasst und geeignete Fügeparameter für die miteinander zu verbindenden Bauteile ermittelt.

Neben der vorteilhaften zerstörungsfreien Ermittlung und Prüfung der Verbindungskennwerte ist eine größtmögliche Kontrolle der Verbindung sowie eine Weiterverwendung der Bauteile möglich. Zudem arbeitet das Testsystem eigenständig und ist, vorzugsweise vollständig, automatisierbar. Aus diesem Grund entfallen Fehlerquellen, die in der manuellen Analyse begründet sind. Weiterhin ermöglicht die gesammelte Datenmenge umfassende Analysen und Auswertungen, inklusive einer Verknüpfung der Prozessparameter, d. h. der Kraft-Weg-Verläufe, der Fügeparameter und der jeweiligen Bauteilparameter in der Datenverarbeitungseinheit des Testsystems.

In einer bevorzugten Ausführungsform des Testsystems ist mit der Datenverarbeitungseinheit als Verbindungskennwert ein Hinterschnitt oder eine Restbodendicke im Fügebereich und/oder einer Halsstärke. Optional ist auch ein Aufspreizverhältnis eines Fügeelements ermittelbar. Wie oben aufgezeigt handelt es sich bei den Verbindungskennwerten insbesondere um Merkmale des inneren Aufbaus der hergestellten mechanischen Fügeverbindung. Denn nur die genaue Analyse des inneren Aufbaus der hergestellten mechanischen Fügeverbindung erlaubt eine Aussage im Hinblick auf die Festigkeit der hergestellten Verbindung.

Weiterhin bevorzugt ist mit der Datenverarbeitungseinheit als Fügeparameter eine Stempel-Gegenwerkzeug- oder Fügeelement-Gegenwerkzeug-Kombination ermittelbar. Dazu kann das Testsystem vorzugsweise auf verschiedene Gegenwerkzeuge und/oder Arten von Fügeelementen zugreifen, die beispielsweise in einem Magazin gelagert werden. Die Zufuhr von unterschiedlichen Arten von Fügeelementen zu einem Fügesystem und/oder der automatisierte Austausch von Gegenwerkzeugen in Fügesystemen ist grundsätzlich bekannt, so dass hierauf nicht näher eingegangen wird. Die Besonderheit der vorliegenden Anmeldung liegt in diesem Zusammenhang in der Kombination mit dem Testsystem, welches eigenständig die optimalen Fügeparameter, d.h. das optimale Gegenwerkzeug und/oder die optimale Art Fügeelement, ermittelt und diese vorzugsweise nicht vorgegeben bekommt.

In einer vorteilhaften Ausgestaltung des Testsystems erfolgt die Prüfung auf Basis von Elektromagnetismus anhand von elektromagnetischen Wellen, insbesondere Röntgenstrahlen, Wirbelstromprüfung oder Thermographie, und die Prüfung auf Basis von Akustik anhand von Ultraschall oder einer Schwingungsanalyse. Wie anhand der aufgelisteten Prüfmethoden erkennbar ist, kann die zerstörungsfreie Prüfung während oder nach Abschluss der Herstellung der mechanischen Fügeverbindung erfolgen. Dabei werden vorzugsweise Röntgenstrahlen oder dergleichen, die Wirbelstromprüfung, die Ultraschallprüfung und die Schwingungsanalyse nach dem Abschluss der Herstellung der Fügeverbindung genutzt. Die Thermographie wird vorzugsweise während der Herstellung der Fügeverbindung eingesetzt, um aufgrund der entstehenden Wärme den gewünschten Verbindungskennwert ermitteln zu können.

Im Fall von beispielsweise Röntgenstrahlung ist zusätzlich zu dem Sensor, der als entsprechender Detektor ausgebildet ist, ebenso eine Strahlenquelle vorhanden. Die miteinander verbundenen Bauteile werden entsprechend zwischen Strahlenquelle und Detektor angeordnet, um ein Bild des inneren Aufbaus der Verbindung zu erhalten. Gleiches gilt für MRT- oder CT-Verfahren, die ebenfalls unter die Prüfung auf Basis von Elektromagnetismus anhand von elektromagnetischen Wellen fallen.

Sofern Ultraschall zur Prüfung verwendet wird, wird ein entsprechender Prüfkopf verwendet, der den Sensor beinhaltet und Ultraschall in die hergestellte Fügeverbindung einbringen kann.

Wie bereits oben dargelegt, ist auf diese Weise ein zerstörungsfreies Prüfverfahren in den Setzprozess integrierbar, um die Verbindungskennwerte während der Verbindungsherstellung zu erfassen, d. h. in Echtzeit oder nachgeschaltet.

Zudem ist es bevorzugt, dass das Testsystem weiterhin einen optischen Sensor umfasst. Aufgrund des optischen Sensors kann ergänzend eine Prüfung auf Basis der Optik durchgeführt werden, insbesondere mittels Fotografie. Die hier gewonnenen Messwerte und Ergebnisse können ergänzend zu dem auf Basis von Elektromagnetismus oder Akustik ermittelten Verbindungskennwert verwendet werden. Dies erhöht die Genauigkeit des Testsystems und des durchgeführten Musterungsprozesses weiterhin.

Vorteilhafterweise umfasst das Testsystem ebenso eine Abschirmung, insbesondere eine lokale oder globale Abschirmung, vorzugsweise gegen elektromagnetische Wellen. Gerade bei der Prüfung auf Basis von Elektromagnetismus und hier insbesondere bei der Verwendung von Röntgenstrahlung oder einer ähnlichen Strahlung ist es besonders vorteilhaft, wenn eine Abschirmung zum Schutz vor Strahlenbelastung vorhanden ist. Hierbei kann entweder eine lokale Abschirmung durch beispielsweise einen lamellenartigen Aufsatz, einen Faltenbalg oder ein passendes Bauteilnegativ vorhanden sein. Alternativ ist die Verwendung einer globalen Abschirmung durch beispielsweise eine Fügezelle realisierbar. Die jeweilige Vorgehensweise ist dem Fachmann grundsätzlich bekannt, so dass diese nicht näher diskutiert wird.

Ein erfindungsgemäßes Fügesystem zum mechanischen Verbinden von mindestens zwei Bauteilen miteinander, umfasst: eine Antriebseinheit, einen Stempel, der mittels der Antriebseinheit entlang einer Längsachse bewegbar ist, sowie ein Gegenwerkzeug, und ein erfindungsgemäßes Testsystem. Das erfindungsgemäße Fügesystem umfasst somit das erfindungsgemäße Testsystem. Im Hinblick auf die technischen Effekte und Vorteile wird auf die obigen Ausführungen zum erfindungsgemäßen Testsystem verwiesen, um Wiederholungen zu vermeiden.

Vorteilhafterweise weist das Fügesystem ein oder mehrere Magazine mit verschiedenen Gegenwerkzeugen auf. Gerade aufgrund des, vorzugsweisen selbstständigen, Zugriffs des Fügesystems und somit auch des Testsystems auf ein oder mehrere Magazine mit verschiedenen Gegenwerkzeugen ist der Musterungsprozess mit dem erfindungsgemäßen Testsystem weiter automatisierbar, wie ebenfalls oben erläutert. Insbesondere sind die Verbindungskennwerte der Fügeverbindung für mehrere verschiedene Fügeparameter, d.h. mehrere verschiedene Gegenwerkzeuge, miteinander vergleichbar und das optimale Gegenwerkzeug ist mittels der Datenverarbeitungseinheit des Testsystems ermittelbar.

In einer bevorzugten Ausführungsform des Fügesystems umfasst das Fügesystem ein Setzwerkzeug zum Setzen eines Fügeelements, insbesondere eines Niets oder eines Schweißhilfsfügeteils. In diesem Zusammenhang ist es besonders vorteilhaft, dass das Fügesystem ein oder mehrere Magazine mit verschiedenen Fügeelementen aufweist. Die oben zum Gegenwerkzeug gemachten Ausführungen gelten in diesem Fall analog für die Fügeelemente. Somit kann das Testsystem selbstständig eine Gegenwerkzeug-Fügeelement-Kombination auswählen, die mit dieser Kombination, d.h. den entsprechenden Fügeparametern, hergestellte Fügeverbindung zerstörungsfrei prüfen und mit anderen Gegenwerkzeug-Fügeelement-Kombinationen vergleichen, um die optimalen Fügeparameter, d.h. die optimale Kombination aus Gegenwerkzeug und Fügeelement, zu ermitteln.

Ein erfindungsgemäßes Verfahren zur zerstörungsfreien Prüfung einer mittels eines erfindungsgemäßen Fügesystems hergestellten mechanischen Fügeverbindung zwischen mindestens zwei Bauteilen sowie zur automatischen Ermittlung der optimalen Fügeparameter, umfasst die folgenden Schritte umfasst: Bereitstellen eines ersten und eines zweiten Bauteils, Herstellen einer mechanischen Fügeverbindung zwischen dem ersten und dem zweiten Bauteil mit einem in einer Datenverarbeitungseinheit in Abhängigkeit von dem ersten und dem zweiten Bauteil ausgewählten ersten Satz Fügeparameter, Erfassen von Messwerten der hergestellten mechanischen Fügeverbindung mit mindestens einem Sensor, Ermitteln eines Verbindungskennwerts in der Datenverarbeitungseinheit basierend auf den erfassten Messwerten, Vergleichen des ermittelten Verbindungskennwerts mit einem Sollwert, ausgehend von dem Vergleich, Klassifizieren der Verbindung als in Ordnung, wenn der ermittelte Verbindungskennwert innerhalb eines vorgebbaren Toleranzbereichs des Sollwerts liegt, oder nicht in Ordnung, wenn der ermittelte Verbindungskennwert außerhalb des vorgebbaren Toleranzbereichs des Sollwerts liegt, danach Wiederholen der Schritte Herstellen, Erfassen, Ermitteln, Vergleichen und Klassifizieren mit einem zweiten Satz Fügeparameter, Vergleichen des Verbindungskennwerts bei dem zweiten Satz Fügeparameter mit dem Verbindungskennwert bei dem ersten Satz Fügeparameter und Ermitteln optimierter Fügeparameter und/oder Prozessparameter in der Datenverarbeitungseinheit aufgrund des Vergleichs. Das erfindungsgemäße Verfahren verwendet das erfindungsgemäße Fügesystem. In dieser Hinsicht wird ebenfalls auf die obigen Ausführungen zum erfindungsgemäßen Testsystem verwiesen, das im erfindungsgemäßen Fügesystem enthalten ist, um Wiederholungen zu vermeiden.

Im Vergleich zum Stand der Technik besteht die größte Schwierigkeit bei dem Verfahren in der Ermittlung der Verbindungskennwerte. Wie oben erläutert sind damit innere Kennwerte der mechanischen Fügeverbindung gemeint, wie beispielsweise der Hinterschnitt und die Restbodendicke im Fügebereich, die Halsstärke bei einer Clinch-Verbindung oder das Aufspreizverhältnis des Fügeelements. Zusätzlich ist es vorteilhaft, wenn ergänzend auch Qualitätsmerkmale wie Risse und eine Stauchung des Fügeelements erfasst werden. Hierfür muss die Verbindung mittels geeigneter Verfahren geprüft, in gewisser Weise durchleuchtet, werden. Daher sind für die Prüfung insbesondere bildgebende Verfahren bevorzugt, die mittels einer entsprechenden Bilderkennung vorzugsweise automatisch auswertbar sind. Aus diesem Grund kommen insbesondere bekannte elektromagnetische, akustische und teilweise auch optische Verfahren in Frage, wie beispielsweise Sonografie oder MRT.

Wie eingangs erläutert beschreiben die bekannten Stand der Technik Konzepte adaptive Verbindungsverfahren, in denen Prozessdaten wie Fügekraft oder Stempelweg erfasst und zur automatischen Anpassung der Prozessparameter, d. h. Kraft, Weg, Geschwindigkeit, Druck und dergleichen, verwendet werden. Dies kommt einem Regelungsprozess gleich, bei dem jedoch keine Musterung oder Bewertung der Verbindungskennwerte erfolgt.

Mit dem erfindungsgemäßen Verfahren, dass das erfindungsgemäße Testsystem verwendet, entscheidet die Datenverarbeitungseinheit eigenständig, d.h. vorzugsweise ohne manuellen Eingriff, welches Fügeelement und/oder welches Gegenwerkzeug für eine bestimmte Bauteilkombination optimal ist. Darum muss das System die Fügeverbindung nicht nur vermessen und prüfen, sondern auch die Verbindungskennwerte berechnen und bewerten. Denn beim Vermessen der Fügeverbindung werden lediglich die Koordinaten bzw. die relativen Positionen von qualitätsbestimmenden Verbindungspunkten erfasst, wie beispielsweise die Tangente am radial äußersten Punkt des Fußes des Fügeelements. Demgegenüber muss bei der Berechnung des Hinterschnitts zusätzlich der radiale Abstand dieses Punktes von der radial innersten Tangente des dem Gegenwerkzeug zugewandten Bauteils bestimmt werden. Beide Koordinaten können beispielsweise mittels Sonografie anhand der Echomuster ermittelt werden. Alternativ ist die Verwendung von Röntgenstrahlen oder dergleichen möglich.

In einer bevorzugten Ausführungsform umfasst das Verfahren den weiteren Schritt: Speichern des ermittelten Verbindungskennwerts in Verbindung mit Daten zu den verwendeten Fügeparametern, Prozessparametern und/oder den Materialdickenkombinationswerten, insbesondere der Materialbezeichnung aller Fügepartner, d.h. der miteinander zu verbindenden Bauteile sowie gegebenenfalls des Fügeelements, der Materialdicken in der Fügezone sowie der Lagenanordnung der miteinander zu verbindenden Bauteile im Stapel. Auf diese Weise ermöglicht das Verfahren neben der zerstörungsfreien Prüfung der Fügeverbindung auch eine Bewertung mit einem Lerneffekt, insbesondere wenn die Verbindungskennwerte zusammen mit den Fügeparametern und der Materialdickenkombination als Datensatz abgespeichert werden. Denn die Materialdickenkombination als Datensatz beinhaltet die genauen Materialbezeichnungen aller Fügepartner, die Materialdicken in der Fügezone und die Lagenanordnung der miteinander zu verbindenden Bauteile im Stapel, wie oben erläutert.

Für zukünftige Fügeverbindungen kann die Datenverarbeitungseinheit aus der Datenbank die abgespeicherten Fügeparameter ähnlicher Kombinationen heraussuchen, testen und gegebenenfalls optimieren. Dafür vergleicht die Datenverarbeitungseinheit das Ergebnis der aktuellen Fügeverbindung mit den Sollvorgaben bzw. mit den Verbindungskennwerten der vorherigen Verbindungen. Die Fügeparameter, d. h. die Auswahl des Fügeelements und/oder des Gegenwerkzeugs, werden dabei so lange variiert, bis die Sollvorgaben erreicht sind und vorzugsweise bis ein Optimum aller Verbindungskennwerte erreicht ist.

Im Hinblick auf das Verfahren ist es ebenfalls bevorzugt, dass dieses die weiteren Schritte aufweist: grafisches Rekonstruieren der hergestellten mechanischen Fügeverbindung in der Datenverarbeitungseinheit aufgrund der vom Sensor erfassten Messwerte und Darstellen der rekonstruierten Fügeverbindung auf einer Anzeigeeinheit. Auf diese Weise ist, neben der automatisierten Durchführung des Verfahrens, eine ergänzende manuelle Kontrolle realisierbar. Somit kann einerseits eine Bewertung im Testsystem nachvollzogen, aber auch gegebenenfalls korrigiert werden.

Weiterhin ist es vorteilhaft, dass das Ermitteln des Verbindungskennwerts umfasst: Ermitteln eines Hinterschnitts oder einer Restbodendicke der hergestellten Verbindung und/oder einer Halsstärke. Optional ist auch das Ermitteln eines Aufspreizverhältnisses eines Fügeelements umfasst. Hierdurch werden insbesondere die oben diskutierten inneren Kennwerte der mechanischen Fügeverbindung ermittelt, so dass eine besonders genaue Bestimmung der Qualität der hergestellten Fügeverbindung gegeben ist und eine Bewertung der mechanischen Fügeverbindung durch die Datenverarbeitungseinheit des Testsystems vorgenommen werden kann.

In einer weiteren bevorzugten Ausführungsform umfasst das Verfahren den weiteren Schritt: Vorgeben der ermittelten optimalen Fügeparameter und/oder Prozessparameter für eine Vielzahl von Fügesysteme. Zu diesem Zweck ist das erfindungsgemäße Fügesystem mit dem erfindungsgemäßen Testsystem mit einer Steuereinheit von Fügesystemen für die Serienproduktion von Komponenten verbunden. Dies ermöglicht somit eine weitere Automatisierung des Herstellungsprozesses von Fügeverbindungen, insbesondere in der Serienproduktion von Komponenten.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:
- Figur 1: eine erste Ausführungsform eines erfindungsgemäßen Fügesystems,
- Figur 2: eine zweite Ausführungsform eines erfindungsgemäßen Fügesystems,
- Figur 3: eine Ausführungsform eines Fügesystems,
- Figur 4: eine schematische Darstellung ausgewählter Verfahrensschritte einer Ausführungsform eines erfindungsgemäßen Verfahrens,
- Figur 5: eine erste schematische Darstellung zur Ermittlung des Hinterschnitts und der Restbodendicke bei einer Verbindung von zwei Bauteilen mittels eines Fügeelements,
- Figur 6: eine zweite schematische Darstellung zur Ermittlung des Hinterschnitts und der Restbodendicke bei einer Verbindung von zwei Bauteilen mittels eines Fügeelements,
- Figur 7: eine schematische Darstellung zur Ermittlung des Hinterschnitts und der Restbodendicke bei einer Verbindung von drei Bauteilen mittels eines Fügeelements,
- Figur 8: eine schematische Darstellung zur Ermittlung des Hinterschnitts, der Restbodendicke und der Halsstärke bei einer Clinch-Verbindung von zwei Bauteilen und
- Figur 9: ein Flussdiagramm einer Ausführungsform eines erfindungsgemäßen Verfahrens.

### 5. Detaillierte Beschreibung der bevorzugten Ausführungsformen

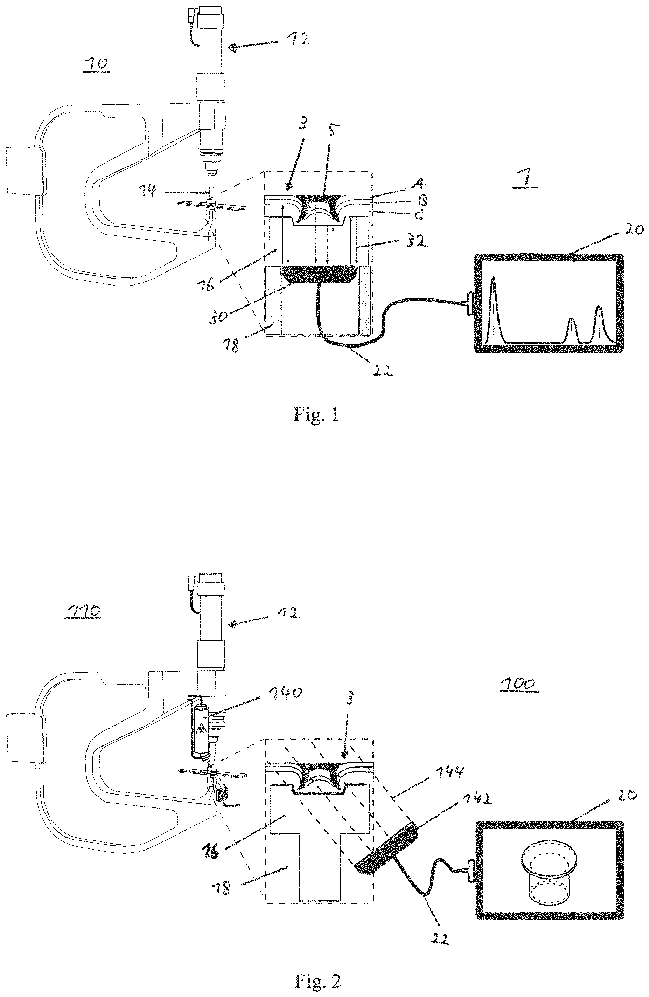

Nachfolgend wird eine erste Ausführungsform eines erfindungsgemäßen Fügesystems 10 anhand von Figur 1 erläutert. Das Fügesystem 10 umfasst in bekannter Weise einen C-förmigen Halter an dem eine Antriebseinheit 12, ein Stempel 14, der mittels der Antriebseinheit 12 entlang einer Längsachse bewegbar ist, sowie ein Gegenwerkzeug 16 angeordnet sind. Das Gegenwerkzeug 16 ist austauschbar und in einem entsprechenden Halter 18 angeordnet, wie anhand der vergrößerten Darstellung in Figur 1 ersichtlich ist.

Im Unterschied zu den bekannten Fügesystemen weist das Fügesystem 10 weiterhin ein Testsystem 1 auf. In der dargestellten Ausführungsform umfasst das Testsystem 1 einen Ultraschall-Prüfkopf 30 mit einem Sensor. Aufgrund der Verwendung von Ultraschall handelt es sich bei dem Sensor um einen akustischen Sensor. Der Ultraschall-Prüfkopf 30 ist mit einer Datenverarbeitungseinheit 20 über ein Anschlusskabel 22 verbunden. Im vorliegenden Fall verfügt die Datenverarbeitungseinheit 20 auch über eine Anzeigeeinheit.

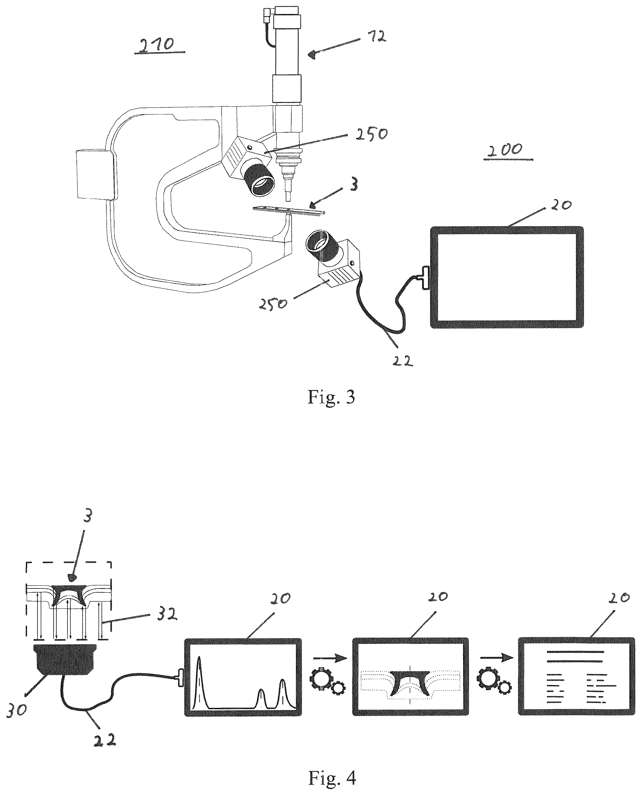

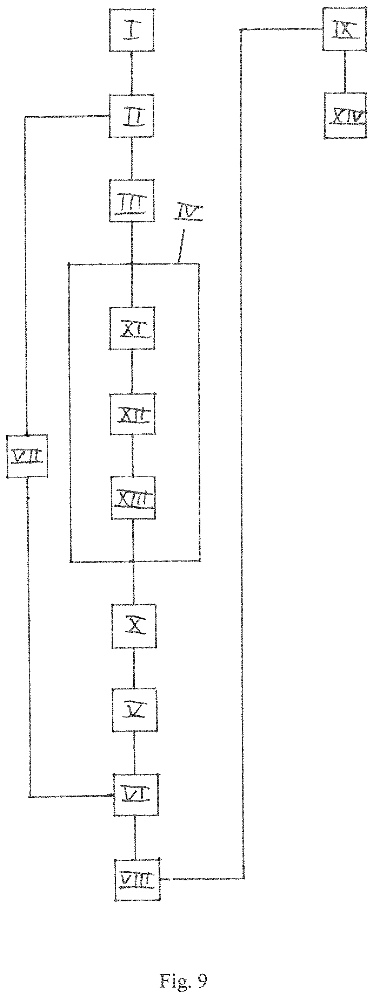

Zum besseren Verständnis des Fügesystems 10 mit dem Testsystem 1 wird nachfolgend die Funktionsweise anhand der Figuren 4 und 9 erläutert.

So werden in einem ersten Schritt I zunächst die miteinander zu verbindenden Bauteile bereitgestellt. Vorliegend handelt es sich um einen Stapel aus einem ersten Bauteil A, einem zweiten Bauteil B und einem dritten Bauteil C. Das erste Bauteil A bildet die Decklage, das dritte Bauteil C die dem Gegenwerkzeug 16 zugewandte Lage und das zweite Bauteil B ist zwischen dem ersten A und dem dritten Bauteil C angeordnet.

Die Datenverarbeitungseinheit 20 kennt, beispielsweise aufgrund einer manuellen Vorauswahl oder einer Datenübermittlung von einer zentralen Steuereinheit, die Parameter der zu verbindenden Bauteile A, B und C. Bei diesen Parametern handelt es sich insbesondere um das Material der jeweiligen Bauteile A, B und C, die Dicke der jeweiligen Bauteile A, B und C, insbesondere im Fügebereich, sowie die Lagenanordnung der Bauteile A, B und C im Stapel. Diese Informationen werden auch als Materialdicken-Kombinationswerte bezeichnet.

Zur Herstellung der mechanischen Fügeverbindung wird in der vorliegenden Ausführungsform zusätzlich ein Fügelement 5 verwendet. Hierbei handelt es sich beispielsweise um einen Niet oder ein Schweißhilfsfügeteil. Vorzugsweise kennt das Testsystem 1 in diesem Fall ebenfalls die Parameter des Fügeelements 5, wie beispielsweise die Materialbezeichnung, die Länge, die Gestaltung und dergleichen.

Vor dem Setzen des Fügeelements 5 kann optional eine Prüfung des Fügeelements 5 im Hinblick auf mögliche Risse, die Länge, bestimmte geometrische Eigenschaften wie beispielsweise die Ausgestaltung des Nietfußes und dergleichen, der Härte, Beschichtung usw. erfolgen.

Alternativ zu der Verwendung des Fügeelements 5 zur Herstellung der mechanischen Fügeverbindung ist die Herstellung der mechanischen Fügeverbindung auch mittels Clinchen realisierbar. Bei diesem Vorgehen entfällt das Fügelement 5 entsprechend.

In einem zweiten Schritt II wird die mechanische Fügeverbindung mit einem ersten Satz Fügeparameter hergestellt. Unter Fügeparameter wird im Rahmen der vorliegenden Beschreibung das verwendete Gegenwerkzeug 16 und/oder das verwendete Fügeelement 5 verstanden. Bei der Herstellung der mechanischen Fügeverbindung mittels Clinchen umfasst der Begriff Fügeparameter daher das verwendete Gegenwerkzeug 16 und/oder den verwendeten Stempel. Dies ist darin begründet, dass beim Clinchen zur Herstellung der Verbindung zwischen den Bauteilen A, B und C eine spezifische Stempelgeometrie erforderlich sein kann. Hierbei kann es sich beispielsweise um eine konische Ausgestaltung des Stempels oder eine ballig Ausgestaltung der Endfläche des Stempels handeln. In jedem Fall, d.h. egal ob bei der Verwendung eines Fügeelements oder bei der Herstellung einer Clinch-Verbindung, ist die Bezeichnung Fügeparameter von den Prozess- oder Setzparametern zu unterscheiden, die die Kraft, den Stempelweg und/oder die Stempelgeschwindigkeit umfassen.

Der erste Satz Fügeparameter, d.h. die Auswahl des Gegenwerkzeugs 16 und im vorliegenden Fall des Fügeelements 5, wird in Abhängigkeit von den miteinander zu verbindenden Bauteilen A, B und C ausgewählt oder vorgegeben. Insbesondere die Datenverarbeitungseinheit 20 des Testsystems 1 wählt aufgrund der Parameter der miteinander zu verbindenden Bauteile A, B und C ein erstes Gegenwerkzeug 16 und/oder eine erste Art Fügeelement 5 aus. Dabei wählt die Datenverarbeitungseinheit 20 anfänglich vorzugsweise ein Standardgegenwerkzeug und ein Standardfügeelement oder einen Standardstempel beim Clinchen aus, um zunächst einen Ausgangspunkt für den später ermittelten Verbindungskennwert und den dazugehörigen Vergleich mit dem Verbindungskennwert bei anderen Fügeparametern zu haben.

Während oder nachdem die Verbindung zwischen den Bauteilen A, B und C hergestellt worden ist, werden über den Ultraschall-Prüfkopf 30 Messsignale ausgesendet und die entsprechenden Reflexionen vom dazugehörigen Sensor im Ultraschall-Prüfkopf 30 empfangen. Die Pfeile zur Darstellung der Messsignale und Reflexionen sind mit dem Bezugszeichen 32 bezeichnet. Somit werden in diesem Schritt III die Messwerte der hergestellten mechanischen Fügeverbindung erfasst. Aufgrund der Verwendung des Ultraschall-Prüfkopfs 30 handelt es sich um eine Prüfung auf Basis der Akustik.

Der Vollständigkeit halber und aufgrund der Verwendung des Testsystems 1 ist festzuhalten, dass es sich bei der hergestellten mechanischen Fügeverbindung, die aus dem ersten A, dem zweiten B, dem dritten Bauteil C sowie dem Fügeelement 5 besteht, um einen Prüfkörper 3 handelt. Denn das Fügesystem 10 mit dem Testsystem 1 dient dazu, einerseits die Qualität der hergestellten mechanischen Fügeverbindung zu prüfen, andererseits aber auch die hergestellte mechanische Fügeverbindung zu mustern und zu bewerten. Denn gerade mit den letzteren Punkten wird eine automatische Auswahl der besonders geeigneten Fügeparameter realisiert, die dann beispielsweise im Rahmen einer Serienproduktion verwendet werden, was nachfolgend verdeutlicht wird.

Ausgehend von den vom Sensor in Schritt III erfassten Messwerten wird in der Datenverarbeitungseinheit 20 im nachfolgenden Schritt IV ein Verbindungskennwert ermittelt. Dieser Schritt des Ermittelns des Verbindungskennwerts kann das grafische Rekonstruieren (Schritt XI) der hergestellten mechanischen Fügeverbindung in der Datenverarbeitungseinheit 20 sowie das Darstellen (Schritt XII) der rekonstruierten mechanischen Fügeverbindung auf einer Anzeigeeinheit umfassen. Die Schritte XI und XII sind optional, da eine Bestimmung der Verbindungskennwerte auch allein ausgehend von den erfassten Messwerten erfolgen kann. Das Ermitteln des Verbindungskennwert kann dabei in einem Schritt XIII das Ermitteln eines Hinterschnitts f oder einer Restbodendicke tₘᵢₙ der hergestellten mechanischen Fügeverbindung und/oder der Halsstärke b umfassen. Optional ist auch das Ermitteln eines Aufspreizverhältnisses des Fügeelements 5 umfasst. Denn nur die genaue Analyse des inneren Aufbaus der hergestellten mechanischen Fügeverbindung erlaubt eine Aussage im Hinblick auf die Festigkeit der hergestellten Verbindung.

Figur 4 zeigt in dieser Hinsicht das Erfassen der Messwerte (Schritt III), das Erstellen der grafischen Rekonstruktion (Schritt XI) sowie das Ermitteln der Verbindungskennwerte in Schritt IV.

Ausgehend von den obigen Erläuterungen handelt es sich bei dem Verbindungskennwert um einen inneren Kennwert der hergestellten mechanischen Fügeverbindung. Als innerer Kennwerte im Rahmen der vorliegenden Erfindung werden insbesondere die verbleibende Restbodendicke und/oder ein erzeugter Hinterschnitt f im Fügebereich, die Halsstärke b bei einer Clinch-Verbindung oder das Aufspreizverhältnis des Fügeelements 5 verstanden. Daher fällt unter den Begriff des Verbindungskennwerts kein Kopfüberstand des Fügeelements 5.

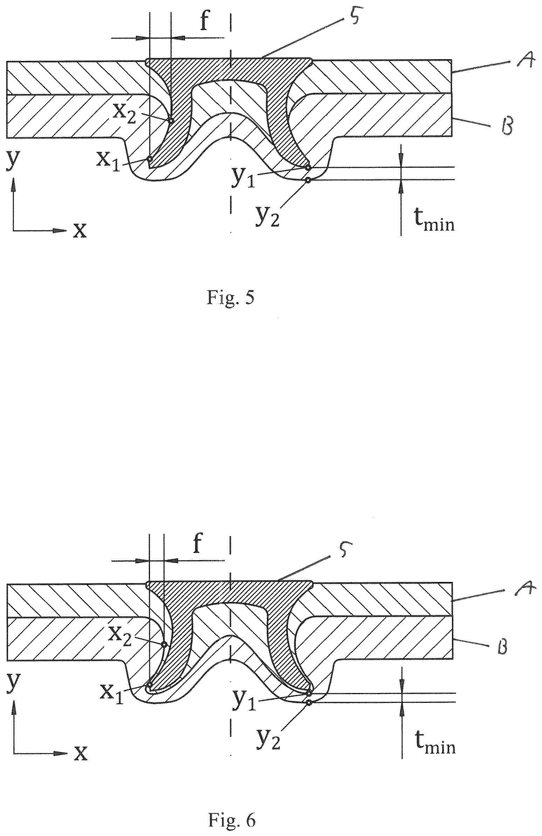

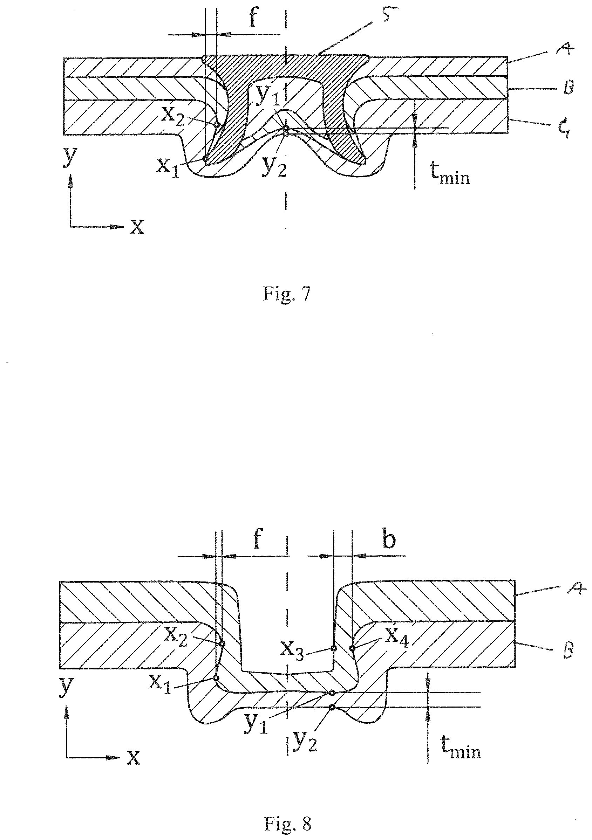

Zum besseren Verständnis werden unter Bezugnahme auf die Figuren 5 bis 7 die Bestimmung des Hinterschnitts f und der Restbodendicke tₘᵢₙ bei Verwendung eines Fügeelements 5 zur Verbindung von zwei Bauteilen (Figuren 5 und 6) oder drei Bauteilen (Figur 7) erläutert.

In diesem Zusammenhang wird ausgehend von Figur 5 zunächst die Vorgehensweise zur Ermittlung des Hinterschnitts f sowie der Restbodendicke tₘᵢₙ bei einer Stanznietverbindung mit zwei Bauteilen erläutert, d.h. bei der Verbindung des ersten Bauteils A und des zweiten Bauteils B mit einem Fügeelement 5. Hierbei hat das Fügeelement 5 das erste Bauteil A, das auch als Decklage bezeichnet wird, vollständig durchtrennt.

Allgemein ist der Hinterschnitt f als der horizontale Abstand der Punkte x₁ und x₂ definiert, wobei x₁ der radial äußerste Punkt des Fußes des Fügeelements 5 in Relation zur zentralen Längsachse oder Rotationsachse des Fügeelements 5 ist. Der Punkt x₂ befindet sich in dem dargestellten Beispiel am Übergangspunkt zwischen den Bauteilen A und B am Schaft des Fügeelements 5. Somit ist der Punkt x₂ da anzusetzen, wo das obere Bauteil A, das untere Bauteil B und der Schaft des Fügeelements 5 zusammentreffen.

Die Restbodendicke tₘᵢₙ ist allgemein definiert als die minimale Materialstärke des dem Gegenwerkzeug 16 zugewandten Bauteils im Fügebereich. In der in Figur 5 gezeigten Ausführungsform handelt es sich hierbei um das zweite Bauteil B. Ein erster Punkt y₁ zur Bestimmung der Restbodendicke tₘᵢₙ befindet sich in diesem Fall an der Kontaktfläche zwischen dem auf dem Gegenwerkzeug 16 aufliegenden Bauteil B und dem Fuß des Fügeelements 5. Ein zweiter Punkt y₂ liegt gegenüber von y₁ an der Außenfläche des Bauteils B.

Nun bezugnehmend auf Figur 6 wird der Fall verdeutlicht, in dem das Fügeelement 5 das obere Bauteil A nicht durchtrennt hat. In diesem Fall ändert sich der für die Bestimmung des Hinterschnitts f maßgebliche zweite Punkt x₂. Denn dieser wird nun nicht mehr durch den Übergangspunkt zwischen den Bauteilen A und B am Schaft des Fügeelements 5 definiert. Vielmehr befindet sich x₂ am Übergangspunkt zwischen den Bauteilen A und B. Im dargestellten Beispiel handelt es sich hierbei um die Stelle, an der das untere Bauteil B den geringsten Abstand zur zentralen Längsachse des Fügeelements 5 radial außen im Bereich des Schafts des Fügeelements 5 aufweist.

Für die Bestimmung der Restbodendicke tₘᵢₙ ändert sich der erste Punkt y₁. Denn dieser wird nun nicht durch die Kontaktfläche zwischen dem auf dem Gegenwerkzeug 16 aufliegenden Bauteil B und dem Fuß des Fügeelements 5 bestimmt, sondern durch die Kontaktfläche zwischen dem Bauteil B und dem darüber liegenden Bauteil A. Im dargestellten Beispiel liegen beide Punkte y₁ und y₂ weiterhin axial unterhalb des Fußes des Fügeelements 5.

Figur 7 wiederum verdeutlicht die Bestimmung des Hinterschnitts f und der Restbodendicke tₘᵢₙ bei einer Verbindung von drei Bauteilen A, B und C mittels des Fügeelements 5. Der erste Punkt x₁ zur Bestimmung des Hinterschnitts f befindet sich unverändert am radial äußersten Punkt des Fußes des Fügeelements 5. Der zweite Punkt x₂ ist am Übergangspunkt zwischen den Bauteilen B und C vorhanden. Mit anderen Worten, und wie im vorherigen Beispiel, handelt es sich hierbei insbesondere um den Punkt, an dem das untere Bauteil, in diesem Fall das Bauteil C, den geringsten Abstand zur zentralen Längsachse des Fügeelements 5 radial außen im Bereich des Schafts des Fügeelements 5 aufweist.

Die Restbodendicke tₘᵢₙ wird in dem in Figur 7 gezeigten Beispiel zwischen der Außenfläche des untersten Bauteils C, d.h. dem Punkt y₂, und dem aus dem Material des Bauteils B bestehenden Butzen gemessen, wodurch der Punkt y₁ definiert ist.

Der Vollständigkeit halber und unter Bezugnahme auf Figur 8 wird das Vorgehen nun für eine Clinch-Verbindung zwischen zwei Bauteilen A und B erläutert. Wie in den vorherigen Beispielen bestimmt sich der Hinterschnitt f auch hier durch den horizontalen Abstand der Punkte x₁ und x₂. Der erste Punkt x₁ ist dabei der radial äußerste Punkt des oberen Bauteils A im durchgesetzten Fügebereich in Relation zu der zentralen Längsachse oder Rotationsachse des Stempeleindrucks. Daher ist x₁ üblicherweise nicht nur radial außen, sondern auch axial unterhalb des Stempeleindruckes zu finden. Der zweite Punkt x₂ befindet sich am Übergangspunkt zwischen dem ersten Bauteil A und dem zweiten Bauteil B in einem ausgedünnten Halsbereich. Mit anderen Worten, und analog zu den vorherigen Beispielen, handelt es sich hierbei insbesondere um den Punkt, an dem das untere Bauteil B den geringsten Abstand zur zentralen Längsachse des Stempeleindrucks radial außen im Bereich des Stempeleindrucks aufweist.

Die Restbodendicke tₘᵢₙ ist, wie oben ebenfalls allgemein erläutert, auch hier als die minimale Materialstärke des dem Gegenwerkzeug 16 zugewandten Bauteils B im Fügebereich definiert. Der erste Punkt y₁ zur Bestimmung der Restbodendicke tₘᵢₙ befindet sich an der Kontaktfläche zwischen dem dem Gegenwerkzeug 16 zugewandten Bauteil B und dem darüber liegenden Bauteil A. Der zweite Punkt y₂ befindet sich daher gegenüber dem ersten Punkt y₁ an der Außenfläche des Bauteils B.

Ein weiterer Verbindungskennwert bei einer Clinch-Verbindung ist die Halsstärke b. Diese ist definiert als die minimale Materialstärke des dem Stempel zugewandten Bauteils A im Fügebereich oberhalb eines Stempeleindrucks. Ein Punkt x₄ befindet sich dabei im ausgedünnten Bereich des Bauteils A zwischen den beiden Bauteilen A und B. Der andere Punkt x₃ zur Bestimmung der Halsstärke ist gegenüber von x₄ an der inneren zylindrischen Fläche des Bauteils A zu finden.

Wieder bezugnehmend auf die beispielhafte Ausführungsform des Verfahrens würde das Testsystem somit beispielsweise bei einer Ultraschallvermessung eines Fügepunktes die Echosignale des Fügepunktes über eine Strecke, d.h. nur in x-Richtung, oder über eine Fläche erfassen, d.h. in x-Richtung und in z-Richtung bezogen auf das in den Figuren 5 bis 8 gezeigte Koordinatensystem. Da an den Stellen x₁ und x₂ charakteristische Echomuster entstehen, kann die Datenverarbeitungseinheit 20 diese Stellen identifizieren. Dabei muss jedem Echomuster auch die genaue Position in x-Richtung zugeordnet werden, um die horizontalen Abstände bestimmen zu können.

Die vertikalen Höhen oder Positionen von beispielsweise y₁ und y₂ müssen zusätzlich über die Zeit ermittelt werden, die das Echosignal benötigt, um reflektiert am Sensor anzukommen.

Der so ermittelte Verbindungskennwert wird in Schritt X in Verbindung mit Daten zu den verwendeten Fügeparametern, Prozessparametern und/oder den Materialdickenkombinationswerten, insbesondere der Materialbezeichnung aller Fügepartner, der Materialdicken in der Fügezone sowie der Lagenanordnung der miteinander zu verbindenden Bauteile im Stapel, gespeichert.

Weiterhin wird der ermittelte Verbindungskennwert in Schritt V mit einem Sollwert verglichen, beispielsweise aufgrund einer in der Datenverarbeitungseinheit 20 hinterlegten Kennwerttabelle. Basierend auf diesem Vergleich wird die Verbindung von der Datenverarbeitungseinheit 20 in Schritt VI klassifiziert als in Ordnung, wenn der ermittelte Verbindungskennwert innerhalb eines vorgebbaren Toleranzbereichs des Sollwerts liegt, oder als nicht in Ordnung, wenn der ermittelte Verbindungskennwerte außerhalb des vorgebbaren Toleranzbereichs des Sollwerts liegt.

Die Verfahrensschritte II bis VI, optional inklusive einem der Schritte oder aller Schritte X bis XIII, werden mit einem zweiten Satz Fügeparameter in Schritt VII wiederholt. Aufgrund des zweiten Satzes Fügeparameter, der vom ersten Satz verschieden ist, wird bei unveränderten Bauteilen A, B und C eine zweite mechanische Fügeverbindung mit einem anderen Gegenwerkzeug 16 und/oder einer anderen Art Fügeelement 5 hergestellt. Hierzu kann das Testsystem 1 vorzugsweise auf eine Auswahl verschiedener Gegenwerkzeuge 16 und/oder Magazine mit verschiedenen Fügeelementen 5 zugreifen, insbesondere selbstständig und automatisch. Die entsprechenden Vorgehensweisen sind dem Fachmann bekannt, so dass diese hier nicht näher erläutert werden.

Basierend auf den geänderten Fügeparameter können bei Bedarf auch die jeweilige Prozessparameter, d. h. die Kraft, der Stempelweg und/oder die Stempelgeschwindigkeit entsprechend angepasst werden.

Nach diesem zweiten Durchgang vergleicht die Datenverarbeitungseinheit 20 des Testsystems 1 in Schritt VIII, welcher Satz Fügeparameter zu dem besseren Verbindungskennwert für die zu verbindenden Bauteile A, B und C geführt hat.

Auf dieser Grundlage ermittelt die Datenverarbeitungseinheit 20 in Schritt IX die optimalen Fügeparameter.

Selbstverständlich ist dieser Vorgang mit einem dritten, vierten und/oder fünften Satz Fügeparameter wiederholbar, so dass die optimalen Fügeparameter aus einer Vielzahl verschiedener Sätze Fügeparameter für eine bestimmte Auswahl an miteinander zu verbindenden Bauteilen auswählbar sind.

Auf diese Weise entfällt die manuelle Prüfung und Bemusterung der hergestellten Fügeverbindung und der Vorgang ist automatisierbar.

Somit realisiert das erfindungsgemäße Testsystem 1 eine zerstörungsfreie Verbindungsprüfung im Fügeprozess, sodass das Fügesystem 10 eigenständig und automatisiert mindestens eine Verbindungskenngröße erfasst und im Hinblick auf die Verbindungsqualität auswertet. Die Verbindungsparameter oder -kennwerte müssen daher nicht mehr manuell, beispielsweise durch eine Zerstörprüfung und das entsprechende Schliffbild ermittelt werden. Vielmehr können sie automatisiert ermittelt und in Schritt XIV vorzugsweise an andere Fügesysteme, beispielsweise Fügesysteme in einer Serienproduktion, über die Datenverarbeitungseinheit 20 weitergegeben werden. Somit entfallen die dazugehörigen umfänglichen Analysen, die aufwendig und fehlerbehaftet sind.

Neben der vorteilhaften zerstörungsfreien Ermittlung und Prüfung der Verbindungskennwerte ist somit eine größtmögliche Kontrolle der hergestellten Fügeverbindung sowie eine Weiterverwendung der Bauteile A, B und C möglich. Weiterhin entfallen Fehlerquellen, die in der manuellen Analyse begründet sind.

Nachfolgend bezugnehmend auf Figur 2 wird ein alternativer Aufbau eines Fügesystems 110 mit einer anderen Ausführungsform eines Testsystem 100 diskutiert. Denn hier umfasst das Testsystem 100 eine Strahlenquelle 140 für Röntgenstrahlen sowie einen entsprechenden Detektor 142, der den mindestens einen Sensor umfasst. Die hergestellte Fügeverbindung, d. h. der Prüfkörper 3, wird mit Röntgenstrahlen 144 beaufschlagt und die vom Sensor im Detektor 142 erfassten Messwerte werden über das Anschlusskabel 22 an die Datenverarbeitungseinheit 20 übermittelt. Diese erzeugt eine grafische Rekonstruktion der Fügeverbindung, wie oben erläutert.

Der Unterschied zwischen der Ausführungsform gemäß Figur 1 und der Ausführungsform gemäß Figur 2 besteht somit in dem verwendeten Sensor und dem verwendeten Prüfverfahren. So wird in der Ausführungsform gemäß Figur 2 keine akustische Prüfmethode, sondern eine Prüfung auf Basis von Elektromagnetismus, insbesondere von Röntgenstrahlen, durchgeführt. Alternativ kann auch eine Prüfung auf Grundlage der Wirbelstromprüfung oder der Thermographie erfolgen. Insbesondere bei Verwendung der Thermographie wird das Verfahren vorzugsweise während oder unmittelbar nach der Herstellung der mechanische Fügeverbindung durchgeführt. Bei den anderen oben diskutierten Prüfmethoden kann das Verfahren auch mit einem größeren zeitlichen Abstand zum Herstellen der mechanischen Fügeverbindung durchgeführt werden.

Gerade bei der Verwendung von Röntgenstrahlen zur Ermittlung des Verbindungskennwerts ist es besonders bevorzugt, dass das Testsystem 100 eine Abschirmung wie beispielsweise eine lokale oder globale Abschirmung gegen elektromagnetische Wellen aufweist. Dies dient insbesondere dem Schutz der Anwender vor den verwendeten Röntgenstrahlen. Als lokale Abschirmung kommen ein lamellenartiger Aufsatz, ein Faltenbalg oder ein passendes Bauteilnegativ in Frage. Die globale Abschirmung kann mittels einer entsprechend gestalteten Fügezelle realisiert werden, beispielsweise analog zu einer Lärmabschirmung, die grundsätzlich bekannt ist.

Der Verfahrensablauf mit dem Testsystem 100 gemäß der in Figur 2 dargestellten Ausführungsform ist daher analog zu dem für die Ausführungsform gemäß Figur 1 diskutierten.

Figur 3 zeigt eine optionale Ausgestaltung eines Fügesystems 210 mit Testsystem 200. Das hier verwendete Testsystem 200 umfasst zusätzlich, d.h. zusätzlich zu dem Ultraschall-Prüfkopf 30 oder der Strahlenquelle 140 und dem Detektor 142, zwei Digitalkameras 250 als optische Sensoren. Somit kann eine ergänzende Prüfung auf Basis der Optik durchgeführt werden. Die hier gewonnenen Messwerte und Ergebnisse können zusätzlich zu dem aufgrund des oben diskutierten Verfahrens ermittelten Verbindungskennwert verwendet werden. Dies erhöht die Genauigkeit des Testsystems 1; 100 und des durchgeführten Musterungsprozesses zusätzlich.

### 6. Bezugszeichenliste

- 1: Testsystem (1. Ausführungsform)
- 3: Prüfkörper
- 5: Fügeelement

- 10: Fügesystem (1. Ausführungsform)
- 12: Antriebseinheit
- 14: Stempel
- 16: Gegenwerkzeug
- 18: Halter für das Gegenwerkzeug 16

- 20: Datenverarbeitungseinheit
- 22: Anschlusskabel

- 30: Ultraschall-Prüfkopf mit Sensor
- 32: Messignale und Reflexionen

- 100: Testsystem (2. Ausführungsform)
- 110: Fügesystem (2. Ausführungsform)
- 140: Strahlenquelle für Röntgenstrahlen
- 142: Detektor
- 144: Röntgenstrahlen

- 200: Testsystem (3. Ausführungsform)
- 210: Fügesystem (3. Ausführungsform)
- 250: Digitalkamera

- A: erstes Bauteil
- B: zweites Bauteil
- C: drittes Bauteil

- f: Hinterschnitt
- x₁: erster Punkt zur Bestimmung des Hinterschnitts f
- x₂: zweiter Punkt zur Bestimmung des Hinterschnitts f

- tₘᵢₙ: Restbodendicke
- y₁: erster Punkt zur Bestimmung der Restbodendicke tₘᵢₙ
- y₂: zweiter Punkt zur Bestimmung der Restbodendicke tₘᵢₙ

- b: Halsstärke
- x₃: erster Punkt zur Bestimmung der Halsstärke b
- x₄: zweiter Punkt zur Bestimmung der Halsstärke b

## Patentansprüche

1. Ein Testsystem (1; 100; 200) zur automatischen zerstörungsfreien Prüfung einer mittels eines Fügesystems (10; 110; 210) hergestellten mechanischen Fügeverbindung zwischen mindestens zwei Bauteilen (A, B, C) sowie zur automatischen Ermittlung der optimalen Fügeparameter, wobei das Testsystem (1; 100; 200) umfasst:
a. mindestens einen Sensor und mindestens eine Datenverarbeitungseinheit (20), wobei
b. der mindestens eine Sensor ein elektromagnetischer Sensor oder ein akustischer Sensor ist, mit dem Messwerte der hergestellten Fügeverbindung erfassbar sind, so dass das Testsystem (1; 100; 200) die zerstörungsfreie Prüfung auf Basis von Elektromagnetismus oder Akustik vornimmt, und
c. die Datenverarbeitungseinheit (20) so konfiguriert ist, dass mit der Datenverarbeitungseinheit (20) aufgrund der von dem mindestens einen Sensor erfassten Messwerte
c1. mindestens ein Verbindungskennwert der hergestellten Verbindung ermittelt wird,
c2. die hergestellte Verbindung aufgrund des ermittelten Verbindungskennwerts als in Ordnung oder nicht in Ordnung klassifiziert wird, und
das Testsystem (1; 100; 200) ist **dadurch gekennzeichnet, dass** die Datenverarbeitungseinheit (20) so konfiguriert ist, dass mit der Datenverarbeitungseinheit (20) aufgrund der von dem mindestens einen Sensor erfassten Messwerte
c3. Verbindungskennwerte von Fügeverbindungen mit unterschiedlichen Fügeparametern und/oder Prozessparametern verglichen werden und
c4. optimierte Fügeparameter und/oder Prozessparameter aufgrund des Vergleichs der Verbindungskennwerte bei unterschiedlichen Fügeparametern von der Datenverarbeitungseinheit (20) ermittelt werden.

2. Das Testsystem (1; 100; 200) gemäß Patentanspruch 1, wobei die mechanische Fügeverbindung mittels Clinchen oder mit Hilfe eines Fügeelements (5) hergestellt wird und die Datenverarbeitungseinheit (20) so konfiguriert ist, dass mit der Datenverarbeitungseinheit (20) als Verbindungskennwert ein Hinterschnitt (f) oder eine Restbodendicke (tₘᵢₙ) im Fügebereich und/oder eine Halsstärke (b) ermittelt wird.

3. Das Testsystem (1; 100; 200) gemäß einem der vorhergehenden Patentansprüche, wobei die mechanische Fügeverbindung mittels Clinchen oder mit Hilfe eines Fügeelements (5) hergestellt wird und die Datenverarbeitungseinheit (20) so konfiguriert ist, dass mit der Datenverarbeitungseinheit (20) als Fügeparameter eine Stempel-Gegenwerkzeug- oder Fügeelement-Gegenwerkzeug-Kombination ermittelt wird.

4. Das Testsystem (1; 100; 200) gemäß einem der vorhergehenden Patentansprüche, wobei die Prüfung auf Basis von Elektromagnetismus anhand von elektromagnetischen Wellen, insbesondere Röntgenstrahlen, Wirbelstromprüfung oder Thermographie, und die Prüfung auf Basis von Akustik anhand von Ultraschall oder einer Schwingungsanalyse erfolgt.

5. Das Testsystem (1; 100; 200) gemäß einem der vorhergehenden Patentansprüche, das weiterhin einen optischen Sensor umfasst.

6. Das Testsystem (1; 100; 200) gemäß einem der vorhergehenden Patentansprüche, wobei das Testsystem weiterhin eine Abschirmung umfasst, insbesondere eine lokale oder globale Abschirmung gegen elektromagnetische Wellen.

7. Ein Fügesystem (10; 110; 210) zum mechanischen Verbinden von mindestens zwei Bauteilen (A, B, C) miteinander, umfassend:
a. eine Antriebseinheit (12), einen Stempel (14), der mittels der Antriebseinheit (12) entlang einer Längsachse bewegbar ist, sowie ein Gegenwerkzeug (16), und
b. ein Testsystem (1; 100; 200) gemäß einem der vorhergehenden Patentansprüche.

8. Das Fügesystem (10; 110; 210) gemäß Patentanspruch 7, das ein oder mehrere Magazine mit verschiedenen Gegenwerkzeugen (16) aufweist.

9. Das Fügesystem (10; 110; 210) gemäß Patentanspruch 7 oder 8, wobei das Fügesystem (10) ein Setzwerkzeug zum Setzen eines Fügeelements (5) umfasst, insbesondere eines Niets oder eines Schweißhilfsfügeteils.

10. Das Fügesystem (10; 110; 210) gemäß Patentanspruch 9, das ein oder mehrere Magazine mit verschiedenen Fügeelementen (5) aufweist.

11. Ein Verfahren zur zerstörungsfreien Prüfung einer mittels eines Fügesystems (10; 110; 210) gemäß einem der Patentansprüche 7 bis 10 hergestellten mechanischen Fügeverbindung zwischen mindestens zwei Bauteilen (A, B, C) sowie zur automatischen Ermittlung der optimalen Fügeparameter, wobei das Verfahren die folgenden Schritte umfasst:
a. Bereitstellen (I) eines ersten (A) und eines zweiten Bauteils (B),
b. Herstellen (II) einer mechanischen Fügeverbindung zwischen dem ersten (A) und dem zweiten Bauteil (B) mit einem in einer Datenverarbeitungseinheit (20) in Abhängigkeit von dem ersten (A) und dem zweiten Bauteil (B) ausgewählten ersten Satz Fügeparameter,
c. Erfassen (III) von Messwerten der hergestellten mechanischen Fügeverbindung mit mindestens einem Sensor,
d. Ermitteln (IV) eines Verbindungskennwerts in der Datenverarbeitungseinheit (20) basierend auf den erfassten Messwerten,
e. Vergleichen (V) des ermittelten Verbindungskennwerts mit einem Sollwert,
f. ausgehend von dem Vergleich, Klassifizieren (VI) der Verbindung als
f1. in Ordnung, wenn der ermittelte Verbindungskennwert innerhalb eines vorgebbaren Toleranzbereichs des Sollwerts liegt, oder
f2. nicht in Ordnung, wenn der ermittelte Verbindungskennwert außerhalb des vorgebbaren Toleranzbereichs des Sollwerts liegt, und
das Verfahren ist **dadurch gekennzeichnet, dass** es danach die weiteren Schritte umfasst:
g. Wiederholen (VII) der Schritte b. (II) bis f. (VI) mit einem zweiten Satz Fügeparameter und/oder Prozessparameter,
h. Vergleichen (VIII) des Verbindungskennwerts bei dem zweiten Satz Fügeparameter und/oder Prozessparameter mit dem Verbindungskennwert bei dem ersten Satz Fügeparameter und
i. Ermitteln (IX) optimierter Fügeparameter und/oder Prozessparameter in der Datenverarbeitungseinheit (20) aufgrund des Vergleichs.

12. Das Verfahren gemäß Patentanspruch 11, das den weiteren Schritt umfasst:
j. Speichern (X) des ermittelten Verbindungskennwerts in Verbindung mit Daten zu den verwendeten Fügeparametern, Prozessparametern und/oder den Materialdickenkombinationswerten, insbesondere der Materialbezeichnung aller Fügepartner, der Materialdicken in der Fügezone sowie der Lagenanordnung der miteinander zu verbindenden Bauteile im Stapel.

13. Das Verfahren gemäß Patentanspruch 11 oder 12, mit dem weiteren Schritt:
k. grafisches Rekonstruieren (XI) der hergestellten Fügeverbindung in der Datenverarbeitungseinheit (20) aufgrund der vom Sensor erfassten Messwerte und
1. Darstellen (XII) der rekonstruierten Fügeverbindung auf einer Anzeigeeinheit.

14. Das Verfahren gemäß einem der Patentansprüche 11 bis 13, wobei die mechanische Fügeverbindung mittels Clinchen oder mit Hilfe eines Fügeelements (5) hergestellt wird und das Ermitteln (IV) des Verbindungskennwerts umfasst:
m. Ermitteln (XIII) eines Hinterschnitts (f) oder einer Restbodendicke (tₘᵢₙ) der hergestellten Verbindung und/oder einer Halsstärke (b).

15. Das Verfahren gemäß einem der Patentansprüche 11 bis 14, mit dem weiteren Schritt:
n. Vorgeben (XIV) der ermittelten optimalen Fügeparameter und/oder Prozessparameter für eine Vielzahl von Fügesysteme.

## Claims

1. A test system (1; 100; 200) for the automatic, non-destructive testing of a mechanical joining connection established by means of a joining system (10; 110; 210) between at least two components (A, B, C) as well as for the automatic determination of the optimal joining parameters, wherein the test system (1; 100; 200) comprises:
a. at least one sensor and at least one data processing unit (20), wherein
b. the at least one sensor is an electromagnetic sensor or an acoustic sensor with which measurement values of the established joining connection are detectable, so that the test system (1; 100; 200) carries out the non-destructive testing based on electromagnetism or acoustic, and
c. the data processing unit (20) is configured so that with the data processing unit (20) due to the measurement values detected by the at least one sensor
c1. at least one specific value of the connection of the established connection is determined,
c2. the established connection is classified as okay or not okay due to the determined specific value of the connection, and
the test system (1; 100; 200) is **characterized in that** the data processing unit (20) is configured so that with the data processing unit (20) due to the measurement values detected by the at least one sensor,
c3. specific value of the connections of joining connections with different joining parameters and/or process parameters are compared and
c4. optimized joining parameters and/or process parameters are determined by the data processing unit (20) due to the comparison of the specific value of the connections with different joining parameters.

2. The test system (1; 100; 200) according to claim 1, wherein the mechanical joining connection is established by means of clinching or with the help of a joining element (5) and the data processing unit (20) is configured so that as specific connecting value, an undercut (f) or a remaining bottom thickness (tₘᵢₙ) in the joining portion and/or a neck thickness (b) is determined with the data processing unit (20).

3. The test system (1; 100; 200) according to one of the preceding claims, wherein the mechanical joining connection is established by means of clinching or with the help of a joining element (5) and the data processing unit (20) is configured so that with the data processing unit (20) as joining parameter, a punch counter tool or joining element counter tool combination is determined.

4. The test system (1; 100; 200) according to one of the preceding claims, wherein the testing on the basis of electromagnetism is carried out based on electromagnetic waves, in particular x-rays, eddy-current testing or thermographic, and the testing on the basis of acoustics is carried out based on ultrasound or an oscillation analysis.

5. The test system (1; 100; 200) according to one of the preceding claims, furthermore comprising an optical sensor.

6. The test system (1; 100; 200) according to one of the preceding claims, wherein the test system furthermore comprises a shield, in particular a local or global shield against electromagnetic waves.

7. A joining system (10; 110; 210) for mechanically connecting at least two components (A, B, C) with each other, comprising:
a. a drive unit (12), a punch (14) which is movable by means of the drive unit (12) along a longitudinal axis as well as a counter tool (16), and
b. a test system (1; 100; 200) according to one of the preceding claims.

8. The joining system (10; 110; 210) according to claim 7, having one or more magazines with different counter tools (16).

9. The joining system (10; 110; 210) according to claim 7 or 8, wherein the joining system (10) comprises a setting tool for setting a joining element (5), in particular a rivet or a welding auxiliary joining part.

10. The joining system (10; 110; 210) according to claim 9, having one or more magazines with different joining elements (5).

11. A method for the non-destructive testing of a mechanical joining connection between at least two components (A, B, C) established by means of a joining system (10; 110; 210) according to one of the claims 7 to 10 as well as for automatically determining the optimal joining parameters, wherein the method comprises the following steps:
a. providing (I) a first (A) and a second component (B),
b. establishing (II) a mechanical joining connection between the first (A) and the second component (B) with a first set of joining parameters selected in a data processing unit (20) depending on the first (A) and the second component (B),
c. detecting (III) measurement values of the established mechanical joining connection with at least one sensor,
d. determining (IV) a specific value of the connection in the data processing unit (20) based on the ascertained measurement values,
e. comparing (V) the determined specific value of the connection with an index value,
f. based on the comparison, classifying (VI) the connection as
f1. okay, when the determined specific value of the connection lies within a settable tolerance range of the index value, or
f2. not okay when the determined specific value of the connection lies outside the settable tolerance range of the index value, and
the method is **characterized in that** afterwards, it comprises the further steps:
g. repeating (VII) steps b. (II) to f. (VI) with a second set of joining parameters and/or process parameters,
h. comparing (VIII) the specific value of the connection of the second set of joining parameters and/or process parameters with the specific value of the connection of the first set of joining parameters and
i. determining (IX) optimized joining parameters and/or process parameters in the data processing unit (20) due to the comparison.

12. The method according to claim 11, comprising the further step:
j. storing (X) the determined specific value of the connection in combination with data on the used joining parameters, process parameters and/or the material thickness combination values, in particular the material designation of all joining partners, the material thickness in the joining zone as well as the positional arrangement of the components to be connected in the stack.

13. The method according to claim 11 or 12, with the further step:
k. graphically reconstructing (XI) the established joining connection in the data processing unit (20) due to the measurement values detected by the sensor and
l. depicting (XII) the reconstructed joining connection on a display unit.

14. The method according to one of the claims 11 to 13, wherein the mechanical joining connection is established by means of clinching or with the help of a joining element (5) and the determining (IV) of the specific value of the connection comprises:
m. determining (XIII) an undercut (f) or a remaining bottom thickness (tₘᵢₙ) of the established connection and/or neck thickness (b).

15. The method according to one of the claims 11 to 14 with the further step:
n. setting (XIV) the determined optimal joining parameters and/or process parameters for a plurality of joining systems.

## Revendications

1. Système de test (1 ; 100 ; 200) pour le contrôle non destructif automatique d'une liaison d'assemblage mécanique entre au moins deux composants (A, B, C) réalisée au moyen d'un système d'assemblage (10 ; 110 ; 210) et pour la détermination automatique des paramètres d'assemblage optimaux, dans lequel le système de test (1 ; 100 ; 200) comporte :
a. au moins un capteur et au moins une unité de traitement de données (20), dans lequel
b. l'au moins un capteur est un capteur électromagnétique ou un capteur acoustique permettant de détecter des valeurs de mesure de la liaison d'assemblage réalisée, de sorte que le système de test (1 ; 100 ; 200) effectue le contrôle non destructif sur la base de l'électromagnétisme ou de l'acoustique, et
c. l'unité de traitement de données (20) est configurée de telle façon que, à partir des valeurs de mesure détectées par l'au moins un capteur, l'unité de traitement de données (20)
c1. détermine au moins une valeur caractéristique de liaison de la liaison réalisée,
c2. classe la liaison réalisée comme étant correcte ou incorrecte à partir de la valeur caractéristique déterminée, et
le système de test (1 ; 100 ; 200) est **caractérisé en ce que** l'unité de traitement de données (20) est configurée de telle façon qu'à partir des valeurs de mesure détectées par l'au moins un capteur, l'unité de traitement de données (20)
c3. compare des valeurs caractéristiques de liaison de liaisons d'assemblage avec différents paramètres d'assemblage et/ou paramètres de processus et
c4. l'unité de traitement de données (20) détermine des paramètres d'assemblage et/ou des paramètres de processus optimaux à partir de la comparaison des valeurs caractéristiques de liaison pour différents paramètres d'assemblage.

2. Système de test (1 ; 100 ; 200) selon la revendication 1, dans lequel la liaison d'assemblage mécanique est réalisée par clinchage ou à l'aide d'un élément d'assemblage (5) et l'unité de traitement de données (20) est configurée de telle façon que l'unité de traitement de données (20) détermine une contre-dépouille (f) ou une épaisseur de fond résiduelle (tₘᵢₙ) dans la région d'assemblage et/ou une épaisseur de col (b), en tant que valeur caractéristique de liaison.

3. Système de test (1 ; 100 ; 200) selon l'une des revendications précédentes, dans lequel la liaison d'assemblage mécanique est réalisée par clinchage ou à l'aide d'un élément d'assemblage (5) et l'unité de traitement de données (20) est configurée de telle façon que l'unité de traitement de données (20) détermine une combinaison de tampon et contre-outil ou d'élément d'assemblage et contre-outil, en tant que paramètre d'assemblage.

4. Système de test (1 ; 100 ; 200) selon l'une des revendications précédentes, dans lequel le contrôle est effectué sur la base de l'électromagnétisme à l'aide d'ondes électromagnétiques, en particulier de rayons X, d'un contrôle par courants de Foucault ou d'une thermographie, et le contrôle est effectué sur la base de l'acoustique à l'aide d'ultrasons ou d'une analyse des vibrations.

5. Système de test (1 ; 100 ; 200) selon l'une des revendications précédentes, lequel comporte en outre un capteur optique.

6. Système de test (1 ; 100 ; 200) selon l'une des revendications précédentes, dans lequel le système de test comporte en outre un blindage, en particulier un blindage local ou global contre des ondes électromagnétiques.

7. Système d'assemblage (10 ; 110 ; 210) pour la liaison mécanique d'au moins deux composants (A, B, C) entre eux, comportant :
a. une unité d'entraînement (12), un tampon (14) déplaçable le long d'un axe longitudinal au moyen de l'unité d'entraînement (12), ainsi qu'un contre-outil (16), et
b. un système de test (1 ; 100 ; 200) selon l'une des revendications précédentes.

8. Système d'assemblage (10 ; 110 ; 210) selon la revendication 7, lequel présente un ou plusieurs magasins comprenant différents contre-outils (16).

9. Système d'assemblage (10 ; 110 ; 210) selon la revendication 7 ou 8, dans lequel le système d'assemblage (10) comporte un outil de pose pour la pose d'un élément d'assemblage (5), en particulier d'un rivet ou d'une pièce d'assemblage d'aide au soudage.

10. Système d'assemblage (10 ; 110 ; 210) selon la revendication 9, lequel présente un ou plusieurs magasins comprenant différents éléments d'assemblage (5).

11. Procédé pour le contrôle non destructif d'une liaison d'assemblage mécanique entre au moins deux composants (A, B, C) réalisée au moyen d'un système d'assemblage (10 ; 110 ; 210) selon l'une des revendications 7 à 10, ainsi que pour la détermination automatique des paramètres d'assemblage optimaux, le procédé comportant les étapes suivantes :
a. mise à disposition (I) d'un premier (A) et d'un deuxième composant (B),
b. réalisation (II) d'une liaison d'assemblage mécanique entre le premier (A) et le deuxième composant (B) avec un premier ensemble de paramètres d'assemblage sélectionnés en fonction du premier (A) et du deuxième composant (B) dans une unité de traitement de données (20),
c. détection (III) de valeurs de mesure de la liaison d'assemblage mécanique réalisée, à l'aide d'au moins un capteur,
d. détermination (IV) d'une valeur caractéristique de liaison dans l'unité de traitement de données (20) sur la base des valeurs de mesure détectées,
e. comparaison (V) de la valeur caractéristique de liaison déterminée avec une valeur de consigne,
f. à partir de la comparaison, classement (VI) de la liaison comme étant
f1. correcte, lorsque la valeur caractéristique de liaison déterminée se trouve dans une plage de tolérance prédéfinissable de la valeur de consigne, ou
f2. incorrecte, lorsque la valeur caractéristique de liaison déterminée se trouve en dehors de la plage de tolérance prédéfinissable de la valeur de consigne, et
le procédé est **caractérisé en ce qu'**il comporte ensuite les étapes suivantes :
g. répétition (VII) des étapes b. (II) à f. (VI) avec un deuxième ensemble de paramètres d'assemblage et/ou de paramètres de processus,
h. comparaison (VIII) de la valeur caractéristique de liaison pour le deuxième ensemble de paramètres d'assemblage et/ou de paramètres de processus avec la valeur caractéristique de liaison pour le premier ensemble de paramètres d'assemblage et
i. détermination (IX) de paramètres d'assemblage et/ou de paramètres de processus optimaux dans l'unité de traitement de données (20) à partir de la comparaison.

12. Procédé selon la revendication 11, lequel comporte l'étape supplémentaire suivante :
j. stockage (X) de la valeur caractéristique de liaison déterminée, en association avec des données relatives aux paramètres d'assemblage, aux paramètres de processus et/ou aux valeurs de combinaison d'épaisseurs de matériau utilisés, en particulier la désignation des matériaux de toutes les pièces à assembler, les épaisseurs de matériau dans la zone d'assemblage et l'agencement en couches des composants à relier entre eux dans la pile.

13. Procédé selon la revendication 11 ou 12, comprenant l'étape supplémentaire suivante :
k. reconstruction graphique (XI) de la liaison d'assemblage réalisée, dans l'unité de traitement de données (20), à partir des valeurs de mesure détectées par le capteur et
l. représentation (XII) de la liaison d'assemblage reconstruite sur une unité d'affichage.

14. Procédé selon l'une des revendications 11 à 13, dans lequel la liaison d'assemblage mécanique est réalisée par clinchage ou à l'aide d'un élément d'assemblage (5) et la détermination (IV) de la valeur caractéristique de liaison comporte :
m. la détermination (XIII) d'une contre-dépouille (f) ou d'une épaisseur de fond résiduelle (tₘᵢₙ) de la liaison réalisée et/ou d'une épaisseur de col (b),

15. Procédé selon l'une des revendications 11 à 14, comprenant l'étape supplémentaire suivante :
n. définition (XIV), pour une pluralité de systèmes d'assemblage, des paramètres d'assemblage et/ou des paramètres de processus optimaux déterminés.
